**Europäisches Patentamt**

**European Patent Office**

**Office européen des brevets**

(11) Veröffentlichungsnummer: **0 223 268**
**B1**

(12) **EUROPÄISCHE PATENTSCHRIFT**

(45) Veröffentlichungstag der Patentschrift:
**29.03.89**

(21) Anmeldenummer: **86201642.5**

(22) Anmeldetag: **23.09.86**

(51) Int. Cl.⁴: **F 16 C 33/20**

(54) **Verfahren zur Herstellung eines wartungsfreien Mehrschicht-Gleitlagerwerkstoffs.**

(30) Priorität: **26.09.85 DE 3534242**

(43) Veröffentlichungstag der Anmeldung:
**27.05.87 Patentblatt 87/22**

(45) Bekanntmachung des Hinweises auf die Patenterteilung:
**29.03.89 Patentblatt 89/13**

(84) Benannte Vertragsstaaten:
**AT BE CH DE FR GB IT LI LU NL SE**

(56) Entgegenhaltungen:
**EP-A-0 005 560**
**EP-A-0 163 937**

(73) Patentinhaber: **KOLBENSCHMIDT Aktiengesellschaft, Karl- Schmidt- Strasse 8/12 Postfach 1351, D-7107 Neckarsulm (DE)**

(72) Erfinder: **Bickle, Wolfgang, Friedenstrasse 15, D-6831 Reilingen (DE)**
Erfinder: **Braus, Jürgen, Johann- Jakob- Astor- Strasse 53, D-6909 Walldorf (DE)**

(74) Vertreter: **Rieger, Harald, Dr., Reuterweg 14, D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines wartungsfreien Mehrschicht-Gleitlagerwerkstoffs, bestehend aus der Kombination eines mit einer Rauhgrundschicht, vorzugsweise einer 0,1 bis 0,35 mm dicken, porös aufgesinterten Bronzeschicht, Eisenschicht oder Schicht einer Aluminiumlegierung, versehenen Metallträgers aus Stahl, Bronze oder einer hochfesten Aluminiumlegierung und einer Gleitschicht aus einer Matrix aus Polytetrafluoräthylen (PTFE), mit deren Werkstoff auch die Rauhgrundtiefen ausgefüllt sind und die gegebenenfalls noch die Reibung verbessernde und den Verschleiß hemmende Zusätze von Blei, Molybdändisulfid, Graphit, Kohlefasern, Glasfasern, Keramikfasern, Glaskugeln, Keramik-Hohlkugeln, Bariumsulfat, Zinksulfid, Bleiborosilikat einzeln oder zu mehreren in einer Menge von 5 bis 40 Gew.-% enthält.

Wegen seiner im Vergleich zu metallischen Werkstoffen geringen Festigkeit, seiner hohen Wärmeausdehnung und seiner schlechten Wärmeleitung ist die Verwendung von PTFE als Massivlager begrenzt. Dem wird dadurch begegnet, daß PTFE im Gemisch mit einem bis zu 20 Vol.-%-igem Bleizusatz in eine auf einem Stahlträger porös aufgesinterte Bronzeschicht von 0,2 bis 0,6 mm Dicke in der Weise aufgebracht ist, daß über den Spitzen der Bronzeschicht eine Gleitschicht des PTFE-Bleigemisches von maximal 0,035 mm vorhanden ist. Die porös aufgesinterte Bronzeschicht bildet einen sehr guten Haftgrund für das PTFE auf dem Metallträger (EP-A-0 005 560). Die Verbindung mit dem Metallträger garantiert, daß aus dem Mehrschicht-Gleitlagerwerkstoff gefertigte Gleitlager hinsichtlich Preßsitz, elastischer Eigenschaften und Wärmeausdehnung den metallischen Gleitlagerwerkstoffen sehr ähnlich sind und daher dünnwandig gut einsetzbar sind. Gegenüber Massivgleitlagerwerkstoffen haben Mehrschicht-Gleitlagerwerkstoffr den Vorteil erhöhter Wärmeleitfähigkeit und erhöhter Festigkeit. Auch sind die daraus gefertigten Gleitlager im allgemeinen sehr hoch, bis ca. 250 H/mm², allerdings bei außerordentlich niedrigen Gleitgeschwindigkeiten, belastbar. Eine Gleitgeschwindigkeit von 1 m/s ist hier schon als groß anzusehen. Als echte Grenze darf man bei Trocken lauf 2 m/s ansetzen. Bei solchen Gleitgeschwindigkeiten ist natürlich keine nennenswerte Belastung mehr möglich. Derartige Gleitlagerwerkstoffe sind aufgrund der genannten Vorzüge weit verbreitet Wegen der großen Wärmeausdehnung und des Kaltfließens des PTFE ist die Dicke der Gleitschicht jedoch auf 0,01 bis 0,035 mm begrenzt, so daß eine Nachbearbeitung der Gleitschicht nicht möglich ist und demzufolge Fluchtungsfehler nicht ausgeglichen oder engere Lagerspiele erzielt werden können. Es können deshalb aus diesem Mehrschicht-Gleitlagerwekstoff nur gerollte Buchsen nach DIN 14 94, Blatt 1, Tabelle 3 Reihe B hergestellt werden.

Aufgabe der vorliegenden Erfindung ist es deshalb, den wartungsfreien Mehrschicht-Gleitlagerwerkstoff der vorstehend erläuterten Ausbildung dahingehend zu verbessern, daß ein nachträgliches Bearbeiten der Gleitschicht der daraus gefertigten Gleitelemente u.a. bei bereits eingebauter Buchse durch Reiben bzw. Feindrehen, z. B. um Fluchtungsfehler auszugleichen, engere Lagerspiele zu erzielen und/oder die Geräuschentwicklung zu vermindern, möglich ist, ohne daß insbesondere der hohe pV-Wert von 1,8 N/mm² m/s im Dauerbetrieb, von 3,6 N/mm² · m/s kurzzeitig, die zulässige statische spezifische Belastung von 250 N/mm², die zulässige Gleitgeschwindigkeit von 2 m/s, die guten Gleiteigenschaften, die niedrige Reibungszahl sowie die gute Wärmeleitfähigkeit beeintrachtigt werden.

Die Lösung dieser Aufgabe besteht darin, daß das eine Korngröße von $\leqslant$ 35 µm aufweisende PTFE unter Zumischung eines Extrusionshilfsmittels zu einem Vorformling gepreßt, dieser zu einem Band von 1,5 bis 5,0 mm Dicke extrudiert, das Band durch konditionierendes Kalandrieren zu einer Folie von 0,5 bis 3,0 mm Dicke geformt, die auf 70 bis 90°C erwärmte Folie auf die Rauhgrundschicht des auf 130 bis 180°C erwärmten Metallträgers unter Abnahme der Dicke auf 0,1 bis 1,0 mm aufgewalzt und anschließend das PTFE durch kontinuierliche Erwärmung auf ca. 400°C und kurzzeitiges Halten bei dieser Temperatur gesintert wird.

In einer bevorzugten Ausführungsform beträgt die Dicke der aufgewalzten Gleitschicht 0,15 bis 0,25 mm.

Auf diese Weise ist es möglich, vorhandene Fluchtungsfehler der Gehäusebohrung durch spanende Nachbearbeitung der Gleitfläche der Lagerbuchse auszugleichen. Außerdem lassen sich dadurch vergleichsweise deutlich engere Lagerspiele einstellen, als diese in DIN 14 94, Blatt 1, Seite 3 angegeben sind.

Aus der GB-PS-970 982 ist zwar ein Mehrschicht-Gleitlagerwerkstoff bekannt, bei dem auf einer metallischen Trägerschicht eine Bronzeschicht porös aufgesintert ist, wobei auf der Bronzeschicht eine Schicht mit einer Schichtdicke von bis zu 3,175 mm aus einem Thermoplast mit hohem Molekulargewicht angeordnet ist. Abgesehen davon, daß in dieser Druckschrift kein Hinweis auf das der vorliegenden Erfindung zugrundeliegende Problem enthalten ist, ist PTFE nicht als Matrix-Werkstoff für die Gleitschicht, sondern nur als Zusatzwerkstoff vorgesehen.

Bei einer besonders vorteilhaften Ausführungsform des nach dem erfindungsgemäßen Verfahren hergestellten Mehrschicht-Gleitlagerwerkstoffs besteht die Gleitschicht aus 20 Gew.-% Glasfasern (Länge $\leqslant$ 0,15 mm, Durchmesser 0,02 mm), 20 Gew.-% Zinksulfid, Rest PTFE. Die Glasfasern können durch Kohlefasern ganz oder teilweise ersetzt sein.

Von Vorzug ist ferner, daß die PTFE-Folie ohne porös aufgesinterte Zwischenschicht unmittelbar auf den Metallträger aufgewalzt sein kann, wenn dieser mechanisch oder chemisch aufgerauht ist.

In an sich bekannter Weise erfolgt anschließend in zwei hintereinander angeordneten Walzstufen das Kalibrieren der Gleitschicht auf die gewünschte Endmaßdicke.

Im folgenden wird eine bevorzugte Ausführungsform für die Herstellung des erfindungsgemäßen Mehrschicht-Gleitlagerwerkstoffs näher und beispielhaft erläutert.

Es wurde PTFE-Pulver mit 20 Gew.-% Glasfasern und 20 Gew.-% Zinksulfid intensiv unter Hinzufügen eines Extrusionshilfsmittels, wie Toluol, vermischt, daraus ein Vorformling gepreßt und dieser einer Extruder-Anlage aufgegeben. Das extrudierte Band wurde dann in einem Kalander zu einer Folie von 2,5 mm Dicke und 250 mm Breite geformt und die Folie anschließend auf eine auf einem auf 150° C erhitzten Stahlträger angeordnete, porös aufgesinterte Zinn-Blei-Bronze-Schicht von 0,3 mm Dicke aufgewalzt, wobei die Walzen eine Temperatur von 100° C aufwiesen. Anschließend wurde der so vorbehandelte Mehrschicht-Gleitlagerwerkstoff kontinuierlich auf 400° C erhitzt und bei dieser Temperatur ca. 3 Minuten gehalten, so daß das PTFE aussinterte.

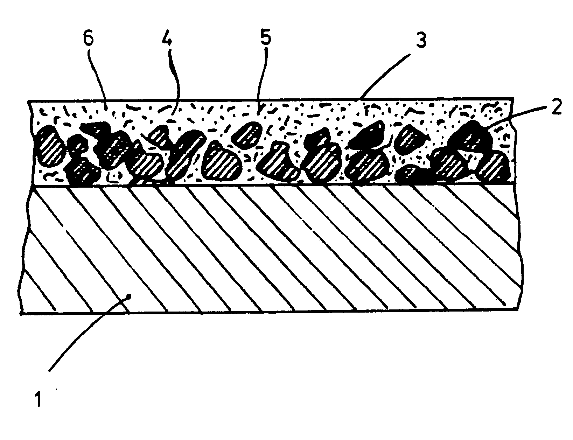

In der Zeichnung ist ein Schnitt durch den erfindungsgemäß hergestellten Mehrschicht-Gleitlagerwerkstoff wiedergegeben. Auf einem aus Stahl bestehenden Metallträger (1) befindet sich eine aus Zinn-Blei-Bronze porös aufgesinterte Rauhgrundschicht (2), deren offenes Porenvolumen 35 % beträgt. Auf der Rauhgrundschicht (2) ist die Gleitschicht (3) angebracht, die aus der PTFE-Matrix (4) und darin enthaltenen Glasfasern (5) und Zinksulfidteilchen (6) besteht. Die Dicke der Gleitschicht (3) beträgt 0,35 mm. Die Poren der Rauhgrundschicht (2) sind mit dem die Gleitschicht bildenden Werkstoff vollständig ausgefüllt.

## Patentansprüche

1. Verfahren zur Herstellung eines wartungsfreien Mehrschicht-Gleitlagerwerkstoffs, bestehend aus der Kombination eines mit einer Rauhgrundschicht (2), vorzugsweise einer 0,1 bis 0,35 mm dicken, porös aufgesinterten Bronzeschicht, Eisenschicht oder Schicht einer Aluminiumlegierung, Versehenen Metallträgers aus Stahl, Bronze oder einer hochfesten Aluminiumlegierung und einer Gleitschicht (3) aus einer Matrix (4) aus Polytetrafluoräthylen (PTFE), mit deren Werkstoff auch die Rauhgrundtiefen ausgefüllt sind und die gegebenenfalls noch die Reibung Verbessernde und den Verschleiß hemmende Zusätze von Blei, Molybdändisulfid, Graphit, Kohlefasern, Glasfasern, Keramikfasern, Glaskugeln, Keramik-Hohlkugeln, Bariumsulfat, Zinksulfid, Bleiborosilikat, einzeln oder zu mehreren in einer Menge von 5 bis 40 Gew-% enthält, dadurch gekennzeichnet, daß das eine Korngröße von ≤ 35 µm aufweisende PTFE unter Zumischung eines Extrusionshilfsmittels zu einem Vorformling gepreßt, dieser zu einem Band von 1,5 bis 5,0 mm Dicke extrudiert, das Band durch konditionierendes Kalandrieren zu einer Folie von 0,5 bis 3,0 mm Dicke geformt, die auf 70 bis 90° C erwärmte Folie auf die Rauhgrundschicht des auf 130 bis 180° C erwärmten Metallträgers unter Abnahme der Dicke auf 0,1 bis 1,0 mm aufgewaltzt und anschließend das PTFE durch kontinuierliche Erwärmung auf ca 400° C und kurzzeitiges Halten bei dieser Temperatur gesintert wird.

2. Verfahren nach Anspruch 1, dadurch gekennzeichnet, daß die Dicke der aufgewalzten Gleitschicht (3) 0,15 bis 0,25 mm beträgt.

3. Verfahren nach den Ansprüchen 1 und 2, dadurch gekennzeichnet, daß die Gleitschicht (3) aus 20 Gew.-% Glasfasern, 20 Gew.-% Zinksulfid, Rest PTFE, besteht.

## Claims

1. Process for producing a maintenance-free multilayer sliding bearing material, consisting of a combination of a metal backing made of steel, bronze or a high-strength aluminium alloy, provided with a rough primer layer (2), preferably a 0.1 to 0.35 mm thick, porous sinter-bonded bronze layer, iron layer, or aluminium alloy layer, and a bearing layer (3) consisting of a matrix (4) of polytetrafluoroethylene (PTFE), with which material the valleys of the rough primer layer are also filled and which may also optionally contain friction-reducing and wear-inhibiting additives of lead, molybdenum disulphide, graphite, carbon fibres, glass fibres, ceramic fibres, glass spheres, hollow ceramic spheres, barium sulphate, zinc sulphide, lead borosilicate, individually or in combination in a quantity of 5 to 40 % weight, characterised in that the PTFE, which has a grain size of ≤ 35 µm, is moulded with an admixed extrusionassisting agent into a preform, said preform is extruded into a strip 1.5 to 5.0 mm thick, the strip is formed into a sheet 0.5 to 3.0 mm thick by conditioning calendering, the sheet, which is heated to 70 to 90° C, is rolled on to the rough primer layer of the metal backing, which has been heated to 130 to 180° C with a decrease in thickness to 0.1 to 1.0 mm, and subsequently the PTFE is sintered by continuous heating to approximately 400° C and maintaining at this temperature for a short time.

2. Process according to Claim 1, characterised in that the thickness of the rolled-on bearing layer (3) is 0.15 to 0.25 mm.

3. Process according to Claims 1 and 2, characterised in that the bearing layer (3) consists of 20 % weight glass fibres, 20 % weight zinc sulphide and balance PTFE.

**Revendications**

1. Procédé de préparation d'un matériau pour paliers lisses, à plusieurs couches, ne nécessitant pas d'entretien, constitué de la combinaison d'un support métallique en acier, en bronze ou en un alliage d'aluminium très résistant, muni d'une couche de base rugueuse (2) de préférence d'une couche de bronze, d'une couche de fer ou d'une couche en un alliage d'aluminium déposée par frittage, poreuse et d'une épaisseur de 0,1 à 0,35 mm, et d'une couche de glissement (3) constituée d'une matrice (4) en polytétrafluoroéthylène (PTFE), les cavités de la couche de base rugueuse étant aussi emplies de ce matériau, et qui contient éventuellement, seul ou en combinaison en une quantité de 5 à 40% en poids, des additifs améliorant le frottement et empêchant l'usure à base de plomb, de disulfure de molybdène, de graphite, de fibres de carbone, de fibres de verre, de fibres en céramique, de billes de verre, de billes creuses en céramique, de sulfate de baryum, de sulfure de zinc, de borosilicate de plomb, caractérisé en ce qu'il consiste à comprimer en une pré-ébauche un PTFE ayant une granulométrie $\leqslant$ 35 µm avec addition d'un adjuvant d'extrusion, à l'extruder en une bande de 1,5 à 5,0 mm d'épaisseur, à mettre la bande sous la forme d'une feuille de 0,5 à 3,0 mm d'épaisseur par un calandrage de conditionnement, à déposer par laminage la feuille, portée entre 70 et 90°C, sur la couche de base rugueuse du support métallique porté entre 130 et 180°C avec diminution de l'épaisseur jusqu'à 0,1 à 1,0 mm et ensuite à fritter le PTFE en le chauffantde façon continue jusqu'à 400°C environ et en le maintenant brièvement à cette température.

2. Procédé selon la revendication 1, caractérisé en ce que l'épaisseur de la couche de glissement (3) déposée par laminage est comprise entre 0,15 et 0,25 mm.

3. Procédé selon la revendication 1 ou 2, caractérisé en ce que la couche de glissement (3) est constituée de 20% en poids de fibres de verre, de 20% en poids de sulfure de zinc, le solde étant du PTFE.